# EUROPEAN PATENT APPLICATION

(11) **EP 4 270 736 A1**
(43) Date of publication of application: **01.11.2023**
(21) Application number: 20966326.9
(22) Date of filing: 22.12.2020
(51) Int. Cl.: H02K 1/28, H02K 1/27, H02K 1/22, H02K 7/04

(54) **MOTOR ROTOR BALANCE RING, MOTOR ROTOR ASSEMBLY, AND ASSEMBLY METHOD**

(71) Applicant: Zhejiang Geely Holding Group Co., Ltd., Hangzhou, Zhejiang 310051 (CN); VIRIDI E-MOBILITY TECHNOLOGY (NINGBO) CO., LTD., Ningbo, Zhejiang 315336 (CN)
(72) Inventor: XU, Haojie, Hangzhou Bay New District Ningbo, Zhejiang 315336 (CN); RUAN, Ou, Hangzhou Bay New District Ningbo, Zhejiang 315336 (CN); ZHAO, Qianjian, Hangzhou Bay New District Ningbo, Zhejiang 315336 (CN); LU, Jun, Hangzhou Bay New District Ningbo, Zhejiang 315336 (CN); MAO, Weina, Hangzhou Bay New District Ningbo, Zhejiang 315336 (CN)
(74) Representative: Neusser, Sebastian
(86) International application number: PCT/CN2020/138399
(87) International publication number: WO 2022/133745

(57) **Abstract**

Provided are a motor rotor balance ring, a motor rotor assembly, and an assembly method. The motor rotor balance ring includes a flange ring body, and a collar internally embedded in an inner ring of the flange ring body. An anti-disengagement structure is disposed on and protrudes from the collar. The anti-disengagement structure is configured to prevent an axial disengagement of the collar. A rotation-stopping structure is disposed on an outer surface of the collar. The rotor balance ring of the present disclosure has high precision and small vibration. In addition, it is possible to reduce the number of parts of the motor rotor assembly and assembly steps, improve production and assembly efficiency, and reduce labor and equipment investment. Thus, cost of a motor can be lowered.

## Description

### FIELD

The present disclosure relates to the field of motor technologies, and in particular, to a motor rotor balance ring, a motor rotor assembly, and an assembly method.

### BACKGROUND

A motor rotor assembly serves as a rotation component in a motor and is a conversion device for realizing mutual conversion between electric energy and mechanical energy. It is important to ensure reliability of all components of the rotor. As a rotation speed of the motor becomes higher and higher, requirements for an unbalance amount of the rotor becomes higher and higher. A balance ring (also called a magnet vane or a balance plate) is one of the key components as a carrier for adjusting a balance amount. In a case of a greater unbalance amount, the rotor would generate vibration noise during its rotation, which results in reduced performance of the motor and operation unsafety.

In order to avoid change in dynamic balance of the motor rotor assembly due to relative rotation or movement of a dynamic balance ring during the rotation of the rotor, circumferential limiting is performed between the balance ring and a rotation shaft through a key connection, and the balance ring and the rotation shaft are locked by a round nut, and rotation stopping is implemented by means of a lock washer to axially limit the balance ring, thereby ensuring stability of a height of an iron core; or a thermal collar may be mounted over the rotation shaft in a heating manner with a maximum interference fit with the rotation shaft, so as to axially limit the balance ring, thereby ensuring the stability of the height of the iron core. In the related art, the motor rotor assembly has many parts, low production and assembly efficiency, and requires the round nut to angle-control a screwing device, a thermal sleeve device, or the like. Thus, the motor has high cost.

### SUMMARY

The present disclosure is directed at solving the technical problems such as a complex structure of a balance ring of a rotator, many parts of a motor rotor assembly, and low production and assembly efficiency when the balance ring is connected to a rotation in the related art.

In order to solve the above technical problems, for disadvantageous and defects of the related art, embodiments of the present disclosure provide a motor rotor balance ring, including a flange ring body and a collar internally embedded in an inner ring of the flange ring body. An anti-disengagement structure is disposed on and protrudes from the collar. The anti-disengagement structure is configured to prevent an axial disengagement of the collar. A rotation-stopping structure is disposed on an outer surface of the collar.

Further, a groove is formed on the inner ring of the flange ring body and engaged with the anti-disengagement structure. The groove is an annular groove or a plurality of grooves in an annular array.

Further, the anti-disengagement structure is a protrusion structure disposed on the collar. The protrusion structure is engaged and connected with the groove.

Further, a boss end of the flange ring body has a boss surface. One end of the collar is embedded in the flange ring body, and an end surface of another end of the collar is flush with the boss surface.

Further, the rotation rotation-stopping structure is symmetrical plane structures arranged on an outer peripheral surface of the collar.

Further, an outer diameter of the collar is D1, and an outer diameter of the boss end is D2, where 0.25≤D1/D2≤1.

Further, the flange ring body is made of an aluminum alloy material, and the collar is made of a low-carbon steel material.

Embodiments of the present disclosure also provide a motor rotor assembly including a rotation shaft, a balance body, a magnet, a rotor core, and the motor rotor balance ring. The magnet is disposed within the rotor core. The balance body, the rotor core, and the rotor balance ring are sleeved over the rotation shaft. The balance body and the rotor balance ring are arranged at two ends of the rotor core, respectively.

Further, the rotor balance ring and the rotation shaft are connected to each other by means of a minimum interference fit.

Embodiments of the present disclosure also provide an assembly method for a motor rotor assembly. The assembly method includes: sleeving the balance body over the rotation shaft to a fixed position; mounting the magnet into the rotor core, and mounting the rotor core to the rotation shaft, in which the magnet is fixed to the rotor core through magnet adhesive or plastic injection-molding; sleeving the rotor balance ring over the rotation shaft, and locking the rotor balance ring by a frock clamp, to embed the collar into a threaded material of the rotation shaft; and performing a dynamic balance test, and adjusting a dynamic balance of the motor rotor assembly.

The embodiments of the present disclosure have the following beneficial effects.
(1) In the present disclosure, the collar is internally embedded in a flange-shaped rotor balance ring and has the anti-disengagement structure and provided with the rotation-stopping structure. The rotor balance ring is in the minimum interference fit with the rotation shaft, and the collar is embedded into the threaded material of the rotation shaft. Therefore, it is possible to remove a round nut or a thermal collar, and functions can be integrated on the rotor balance ring to reduce the number of parts. Thus, the rotor has high dynamic balance precision, and small vibration and noise.
(2) According to the present disclosure, with the assembly of the rotor balance ring, steps of manually knocking the round nut and the lock washer or the thermally sleeving of the thermal collar are removed, and assembly steps are reduced. Thus, the production and assembly efficiency can be improved, and labor and equipment investment are reduced. Therefore, cost of the motor can be lowered.

### BRIEF DESCRIPTION OF THE DRAWINGS

In order to describe the technical solutions of the present disclosure more clearly, the accompanying drawings that need to be used in the description of the embodiments or the related art will be discussed briefly below. Obviously, the accompanying drawings described below are only some embodiments of the present disclosure. For those of ordinary skill in the art, other drawings can be obtained based on these drawings without inventive efforts.
FIG. 1 is a cross-sectional view of a motor rotor balance ring according to Embodiment 1 of the present disclosure;
FIG. 2 is a side view of a motor rotor balance ring according to Embodiment 1 of the present disclosure;
FIG. 3 is a schematic structural view of a motor rotor assembly according to Embodiment 3 of the present disclosure;
FIG. 4 is a schematic structural view of mounting a rotor balance ring and a rotation shaft according to Embodiment 3 of the present disclosure;
FIG. 5 is a sectional detail view of mounting a rotor balance ring and a rotation shaft according to Embodiment 3 of the present disclosure; and
FIG. 6 is an exploded view of the motor rotor assembly according to Embodiment 3 of the present disclosure.

Here, reference numerals in the drawings are described below.
10-rotor balance ring, 1-flange ring body, 11-groove, 12-boss end, 13-boss surface, 2-collar, 21-anti-disengagement structure, 22-rotation-stopping structure, 3-rotation shaft, 31-first end, 32-second end, 4-balance body, 5-magnet, 6-rotor core, 7-frock clamp.

### DETAILED DESCRIPTION

Technical solutions according to embodiments of the present disclosure will be clearly and completely described below in combination with accompanying drawings of the embodiments of the present disclosure. Obviously, the embodiments described below are only a part, rather than all, of the embodiments of the present disclosure. On a basis of the embodiments in the present disclosure, all other embodiments obtained by those of ordinary skill in the art without creative labor shall fall within the scope of the present disclosure.

In the description of the present disclosure, it should be understood that, orientations or position relationships indicated by terms such as "above", "below", "left", "right", etc., are based on the orientation or position relationship shown in the drawings, and is merely for the convenience of describing the present disclosure and simplifying the description, rather than indicating or implying that the associated device or element must have a specific orientation, or be constructed and operated in a specific orientation, and therefore cannot be understood as a limitation on the present disclosure. In addition, terms "first" and "second" are merely for descriptive purposes, and cannot be understood as indicating or implying relative importance or implicitly indicating the number of indicated technical features. Therefore, the features associated with "first" and "second" may explicitly or implicitly include at least one of the features.

In addition, in the present disclosure, unless otherwise clearly specified and limited, terms such as "installed", "connected", "coupled", and the like should be understood in a broad sense. For example, it may be a fixed connection, a detachable connection, or an integral connection; it may be a mechanical connection or electrical connection, a direct connection or an indirect connection through an intermediate, an internal communication of two components. For those of ordinary skill in the art, the specific meaning of the above-mentioned terms in the present disclosure can be understood as desired.

### Embodiments 1

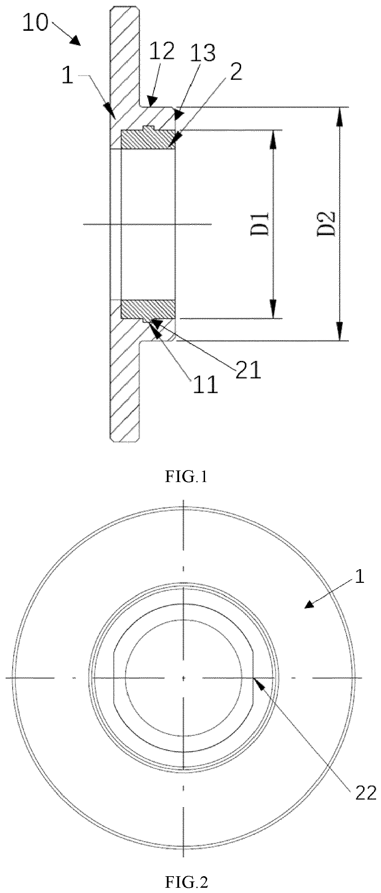

As illustrated in FIG. 1 and FIG. 2, embodiments of the present disclosure provides a motor rotor balance ring. The motor rotor balance ring includes a flange ring body 1 and a collar 2 internally embedded in an inner ring of the flange ring body 1. An anti-disengagement structure 21 is disposed on and protrudes from the collar 2. The anti-disengagement structure 21 is configured to prevent an axial disengagement of the collar 2. A rotation-stopping structure 22 is disposed on an outer surface of the collar 2.

Specifically, a groove 11 is formed on the inner ring of the flange ring body 1 and engaged with the anti-disengagement structure 21. The anti-disengagement structure 21 is a protrusion structure disposed on the collar 2. The protrusion structure is engaged and connected with the groove 11.

Specifically, in the embodiment, the groove 11 is an annular groove, and the anti-disengagement structure 21 engaged with the groove 11 is an annular protrusion. The groove 11 may have a rectangle, swallow-tailed, or dentiform groove recessed inwards relative to an inner surface of the flange ring body, or other grooves engaged with the anti-disengagement structure 21. The anti-disengagement structure 21 is capable of preventing the collar 2 from being thrown out during an operating of the rotor balance ring. Thus, it is possible to provide safe and reliable operation.

Specifically, a boss end 12 of the flange ring body 1 has a boss surface 13. One end of the collar 2 is embedded in the flange ring body 1, and an end surface of the other end of the collar 2 is flush with the boss surface 13. The collar 2 is configured to be connected to a rotation shaft of a motor. Compared with a ring-shaped balance ring, a balance ring of the flange body has better balancing performance.

Specifically, the rotation-stopping structure 22 is symmetrical plane structures arranged on an outer peripheral surface of the collar 2. Specifically, in order to prevent the collar 2 from rotating within the flange ring body 1, the rotation-stopping structure is constructed as the symmetrical plane structures to ensure the balance of the rotor balance ring, so that instability would not occur on the rotor balance ring during its operation.

Specifically, an outer diameter of the collar 2 is D1, and an outer diameter of the boss end 12 is D2, where 0.25≤01/02≤1. It should be noted that the embedded collar 2 is wrapped by the boss end 12. As a result, the outer diameter of the collar 2 is smaller than the outer diameter of the boss end 12. In some embodiments, D1/D2=0.25, D1/D2=0.5, or D1/D2=1.

Specifically, in the embodiment, the flange ring body 1 of the rotor balance ring is made of an aluminum alloy material, which is light in weight and easy to be processed. The collar 2 is made of a low-carbon steel material, preferably, made of 10 # steel with low strength and hardness and good plasticity. A method for forming the rotor balance ring typically includes: first placing the embedded collar 2 into a die-casting mold, and then die-casting the aluminum alloy. According to the embodiments, the rotor balance ring has a simple structure and better balancing performance.

### Embodiment 2

Embodiments of the present disclosure provide a motor rotor balance ring. The motor rotor balance ring includes a flange ring body 1 and a collar 2 internally embedded in an inner ring of the flange ring body 1. An anti-disengagement structure 21 is disposed on and protrudes from the collar 2. The anti-disengagement structure 21 is configured to prevent an axial disengagement of the collar 2. A rotation-stopping structure 22 is disposed on an outer surface of the collar 2.

Specifically, a groove 11 is formed on the inner ring of the flange ring body 1 and engaged with the anti-disengagement structure 21. The anti-disengagement structure 21 is a protrusion disposed on the collar 2. The protrusion is engaged and connected with the groove 11.

Specifically, compared with Embodiment 1, in Embodiment 2, the anti-disengagement structure 21 is a plurality of protrusion structures in an annular array on the outer surface of the collar 2, and the groove 11 is a plurality of grooves engaged with the plurality of protrusion structures. The groove 11 has a shape mated with the protrusion structure. The groove 11 may have a rectangle, swallow-tailed, or dentiform groove recessed inwards relative to an inner surface of the flange ring body, or other grooves engaged with the anti-disengagement structure 21. The anti-disengagement structure 21 is capable of preventing the collar 2 from being thrown out during an operating of the rotor balance ring. Thus, it is possible to provide safe and reliable operation.

Specifically, a boss end 12 of the flange ring body 1 has a boss surface 13. One end of the collar 2 is embedded in the flange ring body 1, and an end surface of the other end of the collar 2 is flush with the boss surface 13. The collar 2 is configured to be connected to a rotation shaft of a motor. Compared with a ring-shaped balance ring, a balance ring of the flange body has better balancing performance.

Specifically, the rotation-stopping structure 22 is symmetrical plane structures arranged on the outer peripheral surface of the collar 2. Specifically, in order to prevent the collar 2 from rotating within the flange ring body 1, the rotation-stopping structure is constructed as the symmetrical plane structures to ensure the balance of the rotor balance ring, so that instability would not occur on the rotor balance ring during its operation.

Specifically, an outer diameter of the collar 2 is D1, and an outer diameter of the boss end 12 is D2, where 0.25≤D1/D2≤1. It should be noted that the embedded collar 2 is wrapped by the boss end 12. As a result, the outer diameter of the collar 2 is smaller than the outer diameter of the boss end 12. In some embodiments, D1/D2=0.25, D1/D2=0.5, or D1/D2=1.

### Embodiment 3

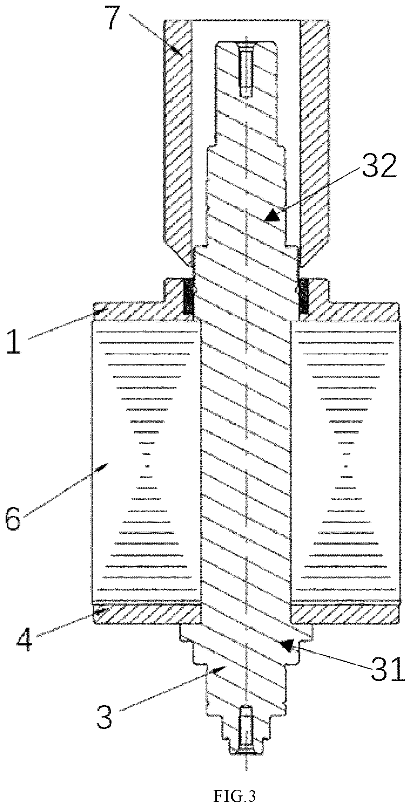

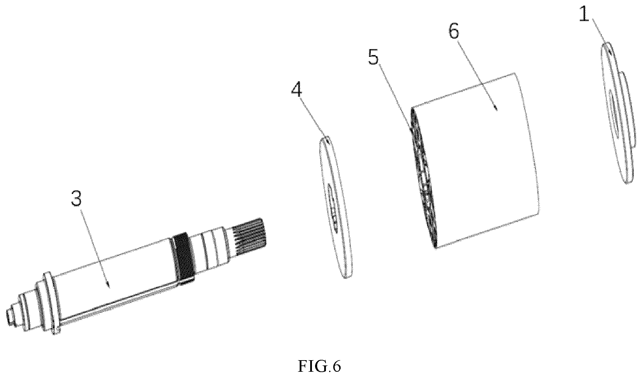

As illustrated in FIG. 3 to FIG. 6, Embodiment 3 of the present disclosure provides a motor rotor assembly including a rotation shaft 3, a balance body 4, a magnet 5, a rotor core 6, and the rotor balance ring 10 as described in Embodiment 1 and Embodiment 2. The magnet 5 is disposed within the rotor core 6. The balance body 4, the rotor core 6, and the rotor balance ring 10 are sleeved over the rotation shaft 3. The balance body 4 and the rotor balance ring 10 are arranged at two ends of the rotor core 6, respectively. Specifically, the boss surface 13 of the flange ring body 1 faces away from the rotor core 6.

It should be noted that, in this embodiment, the rotation shaft 3 includes a first end 31, and a second end 32 connected to a transmission mechanism. The balance body 4 is mounted at the first end 31 of the rotation shaft 3, and the rotor balance ring 10 is mounted at the second end 32 of the rotation shaft 3.

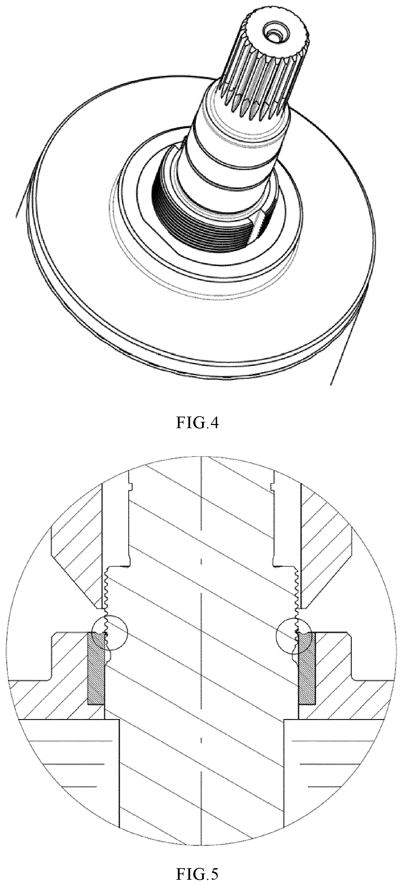

Specifically, as illustrated in FIG. 3, the rotor balance ring 10 and the rotation shaft 3 are connected to each other by means of a minimum interference fit. Through direct cold pressing, the collar 2 is partially pressed and locked by mean of a frock clamp 7 to partially deform the inner ring of the collar 2. Moreover, the collar 2 is embedded into a threaded material of the rotation shaft 3 to form axial limiting and circumferential limiting. As can be seen in FIG. 4 and FIG. 5, the inner ring of the locked collar 2 is deformed and embedded into threads and a key groove of the rotation shaft 3. In some embodiments, a thread pitch of the threads of the rotation shaft is P, where 1.0≤P≤3.0. According to the present disclosure, the rotor balance ring has simple assembly steps and high assembly efficiency.

It should be noted that, in the present disclosure, the embedded collar 2 and the rotation shaft 3 are connected to each other by means of the interference fit, which can ensure the axial limiting and the circumferential limiting of the rotor balance ring 10 without a thermal collar with a great interference fit or a round nut requiring for a lock washer in the related art. Therefore, it is possible to reduce the number of parts and assembly steps of the rotor assembly and labor and equipment investment, and improve production efficiency. Thus, cost of the motor can be lowered.

In the embodiment, an assembly method for a motor rotor assembly is further provided. The assembly method includes actions at block S001 to block 5007.

At block 5001, the balance body is sleeved over the rotation shaft to a fixed position.

At block S003, the magnet is mounted into the rotor core, and the rotor core is mounted to the rotation shaft. The magnet is fixed to the rotor core by a magnet adhesive or plastic injection-molding.

At block S005, the rotor balance ring is sleeved over the rotation shaft, and the rotor balance ring is locked by a frock clamp, to embed the collar into a threaded material of the rotation shaft.

At block S007, a dynamic balance test is performed, and a dynamic balance of the motor rotor assembly is adjusted.

When comprehensively considering in terms of practicality and economy, the rotor balance ring has a simple structure and better balancing performance. The maximum interference fit between the collar and the rotation shaft can ensure the axial limiting and the circumferential limiting of the balance ring while reducing the number of assembled parts. Thus, the rotor balance ring of the present disclosure has low cost and high performance-cost ratio. According to the present disclosure, the rotor balance ring can be widely used in motors operated at various rotation speeds, temperatures, and high strength.

Although preferred embodiments of the present disclosure have been illustrated and described above, it should be noted that, for those of ordinary skill in the art, various changes and modifications can be made to these embodiments without departing from the principles and spirits of the present disclosure. Further, these changes and modifications should be regarded as falling within the scope of the present disclosure.

## Claims

1. A motor rotor balance ring, comprising:
a flange ring body (1); and
a collar (2) internally embedded in an inner ring of the flange ring body (1), wherein:
an anti-disengagement structure (21) is disposed on and protrudes from the collar (2), the anti-disengagement structure (21) being configured to prevent an axial disengagement of the collar (2); and
a rotation-stopping structure (22) is disposed on an outer surface of the collar (2).

2. The motor rotor balance ring according to claim 1, wherein a groove (11) is formed on the inner ring of the flange ring body (1) and engaged with the anti-disengagement structure (21), the groove (11) being an annular groove or a plurality of grooves in an annular array.

3. The motor rotor balance ring according to claim 2, wherein the anti-disengagement structure (21) is a protrusion structure disposed on the collar (2), the protrusion structure being engaged and connected with the groove (11).

4. The motor rotor balance ring according to claim 1, wherein:
a boss end (12) of the flange ring body (1) has a boss surface (13); and
one end of the collar (2) is embedded in the flange ring body (1), and an end surface of another end of the collar (2) is flush with the boss surface (13).

5. The motor rotor balance ring according to claim 1, wherein the rotation-stopping structure (22) is symmetrical plane structures arranged on an outer peripheral surface of the collar (2).

6. The motor rotor balance ring according to claim 4, wherein an outer diameter of the collar (2) is D1, and an outer diameter of the boss end (12) is D2, where 0.25≤D1/D2≤1.

7. The motor rotor balance ring according to claim 1, wherein:
the flange ring body (1) is made of an aluminum alloy material; and
the collar (2) is made of a low-carbon steel material.

8. A motor rotor assembly, comprising:
a rotation shaft (3);
a balance body (4);
a magnet (5);
a rotor core (6); and
the motor rotor balance ring (10) according to any one of claims 1 to 7, wherein:
the magnet (5) is disposed within the rotor core (6);
the balance body (4), the rotor core (6), and the rotor balance ring (10) are sleeved over the rotation shaft (3); and
the balance body (4) and the rotor balance ring (10) are arranged at two ends of the rotor core (6), respectively.

9. The motor rotor assembly according to claim 8, wherein the rotor balance ring (10) and the rotation shaft (3) are connected to each other by means of a minimum interference fit.

10. An assembly method for a motor rotor assembly, applied in the motor rotor assembly according to claim 8 or 9, the assembly method comprising:
sleeving the balance body over the rotation shaft to a fixed position;
mounting the magnet into the rotor core, and mounting the rotor core to the rotation shaft, wherein the magnet is fixed to the rotor core through magnet adhesive or plastic injection-molding;
sleeving the rotor balance ring over the rotation shaft, and locking the rotor balance ring by a frock clamp, to embed the collar into a threaded material of the rotation shaft; and
performing a dynamic balance test, and adjusting a dynamic balance of the motor rotor assembly.
